# EUROPÄISCHE PATENTSCHRIFT

(11) **EP 2 942 644 B1**
(45) Veröffentlichungstag und Bekanntmachung des Hinweises auf die Patenterteilung: **18.05.2016**
(21) Anmeldenummer: 15158381.2
(22) Anmeldetag: 10.03.2015
(51) Int. Cl.: G01S 17/10, G01S 7/285, G01S 7/486, G01S 7/487

(54) **ENTFERNUNGSMESSENDER SENSOR UND VERFAHREN ZUR ERFASSUNG UND ABSTANDSBESTIMMUNG VON OBJEKTEN**
DISTANCE MEASURING SENSOR AND METHOD FOR RECORDING AND DETERMINING THE DISTANCE OF AN OBJECT
CAPTEUR TÉLÉMÉTRIQUE ET PROCÉDÉ DESTINÉ À LA DÉTECTION ET LA DÉTERMINATION DE L'ÉLOIGNEMENT D'OBJETS

(30) Priorität: 08.05.2014 DE 102014106463
(43) Veröffentlichungstag der Anmeldung: 11.11.2015
(73) Patentinhaber: SICK AG, 79183 Waldkirch (DE)
(72) Erfinder: Clemens, Klaus, 79367 Weisweil (DE); Marra, Martin, 79117 Freiburg (DE)
(74) Vertreter: Hehl, Ulrich

(56) Entgegenhaltungen:
- WO-A1-2009/101002
- DE-A1- 4 108 376
- DE-A1-102005 045 993
- DE-B3-102011 056 963
- US-A- 3 967 111

## Beschreibung

Die Erfindung betrifft einen entfernungsmessenden Sensor und ein Verfahren zur Erfassung und Abstandsbestimmung von Objekten nach dem Oberbegriff von Anspruch 1 beziehungsweise 13.

Zahlreiche Sensoren nutzen ein Signallaufzeitprinzip, bei dem die Signallaufzeit, also das Zeitintervall zwischen Senden und Empfang eines Signals, über die Ausbreitungsgeschwindigkeit in eine Entfernung umgerechnet wird. Dabei werden so verschiedene Frequenzbereiche des elektromagnetischen Spektrums ausgenutzt wie Mikrowellen und Licht. Ein Anwendungsbereich für Mikrowellen ist die Füllstandsmessung. Hierbei wird die Signallaufzeit bis zur Reflexion an einer Grenzfläche des Mediums bestimmt, dessen Füllstand zu messen ist. Dabei werden die abgestrahlten Mikrowellen in einer Sonde geführt (TDR, time domain reflectometry), oder alternativ wie bei einem Radar frei abgestrahlt und von der Grenzfläche reflektiert.

Bei optoelektronischen Sensoren nach dem Prinzip des Lichtlaufzeitverfahrens werden Lichtsignale ausgesandt, und die Zeit bis zum Empfang der an Objekten remittierten oder reflektierten Lichtsignale wird gemessen. Optoelektronische Entfernungsmessung kann beispielsweise in der Fahrzeugsicherheit, der Logistik- oder Fabrikautomatisierung oder der Sicherheitstechnik benötigt werden. Meist ist die gesuchte Ausgabegröße der gemessene Abstand. Alternativ kann ein Entfernungsmesser nach dem Lichtlaufzeitverfahren auch schaltend arbeiten, indem eine Entfernungsänderung eines in einem bestimmten Abstand erwarteten Reflektors oder eines reflektierenden oder remittierenden Objekts erkannt wird. Eine besondere Anwendung ist eine Reflexionslichtschranke mit Überwachung des Abstandes zu ihrem Reflektor. Das Lichtlaufzeitverfahren ist auch das Prinzip, nach dem entfernungsmessende Laserscanner arbeiten, die periodisch eine Überwachungsebene oder sogar einen dreidimensionalen Raumbereich abtasten. Speziell in der Sicherheitstechnik werden sichere Laserscanner eingesetzt, die konfigurierbare Schutzfelder auf unzulässige Eingriffe überwachen. Sichere Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Die Genauigkeit der Entfernungsmessung hängt entscheidend davon ab, wie gut der Empfangszeitpunkt bestimmt werden kann. Herkömmliche Pulsverfahren senden einen Einzelpuls und bestimmen die Lage des daraufhin empfangenen Echopulses. Dabei wird der Echopuls durch eine Komparatorschwelle von Störsignalen unterschieden. Das funktioniert nur dann zuverlässig, wenn die Störsignale unterscheidbar kleiner sind als die kleinsten aufzulösenden Echopulse. Schwierigkeiten ergeben sich besonders dann, wenn das Empfangssignal von starkem Rauschen etwa durch Fremdlicht überlagert ist, wenn bei großen Entfernungen ein schwaches Nutzsignal aufgelöst werden soll oder wenn ungünstige Umgebungsbedingungen herrschen, die systematisch relativ hohe Echopulse verursachen, die nicht erfasst werden sollen, etwa von Nebel, starker Staubbelastung, der Luft oder Verunreinigungen einer Frontscheibe des Sensors. Die herkömmliche Gegenmaßnahme ist der Versuch, durch bauliche Maßnahmen wie optische Streulichtunterdrückung, rauscharme elektronische Signalverarbeitung und dergleichen einen besonders großen Signalabstand zwischen schwächstem Nutzsignal und relevanten Störsignalpegeln zu erzeugen. Der erreichte Signalabstand entscheidet dann über die Robustheit des Systems gegenüber den verschiedenen Störeinflüssen.

Beispielsweise aus EP 1 972 961 A1 oder EP 2 469 296 A1 ist ein Laufzeitverfahren bekannt, das anstelle einer Einzelpulsauswertung eine Vielzahl von Einzelmessungen mit jeweils einem Sendepuls durchführt und die jeweiligen Empfangssignale in einem Histogramm aufaddiert. Durch diese statistische Auswertung addiert sich das Nutzsignal, während zufällige Rauscheinflüsse ausgemittelt werden, so dass das Signal-Rausch-Verhältnis deutlich verbessert wird. Eine Besonderheit des Verfahrens ist, dass verschiedene Maßnahmen getroffen werden, um diese komplexere Auswertung auf besonders kostengünstiger Hardware durchführen zu können. Dazu zählt, dass anstelle eines aufwändigen schnellen A/D-Wandlers lediglich ein Null-Schwellen-Komparator eingesetzt wird, der das Einzelsignal mit nur 1-Bit-Auflösung digitalisiert, also binarisiert. Außerdem wird in EP 2 189 804 A1 und EP 2 189 805 A1 die effektive Abtastrate eines solchen statistischen Verfahrens durch mehrere Maßnahmen erheblich erhöht, um den Empfangszeitpunkt und damit die Lichtlaufzeit mit größerer zeitlicher Präzision zu erfassen. Die 1-Bit-Auflösung hat Vorteile etwa durch Implementierung mit einfachen Bauteilen, aber auch Nachteile, denn beispielsweise in der EP 2 189 804 A1 werden zwei hochgenaue PLLs benötigt. Zudem entsteht effektiv eine Rechteckflanke, die nur mit den genannten Maßnahmen zur zeitlichen Auflösungserhöhung hinreichend genau lokalisiert werden kann. Der Stand der Technik erwähnt auch die Möglichkeit, mit mehr als einem Bit Auflösung zu digitalisieren. Durch Abstufungen der Amplitudenauflösung wird eine Rechteckflanke aber auch nicht genauer zeitlich lokalisiert.

In der EP 2 314 045 B1 werden ähnlich wie in den im vorigen Abschnitt zitierten Dokumenten jeder Entfernungsmessung eine Vielzahl von Einzelpulsen zugrunde gelegt. Die jeweiligen Sendezeitpunkte werden variiert, damit der Empfangszeitpunkt in dem Histogramm über mehrere Bins verteilt wird. Das erfordert aber eine entsprechende Ansteuerung und Koordination zwischen Sende- und Empfangspfad, und die Zeitauflösung einer Einzelmessung wird nicht verbessert, da der Effekt auf den Wiederholungen basiert.

Die DE 10 2011 056 963 B3 beschreibt einen entfernungsmessenden Sensor, der die SERDES-Schnittstelle eines FPGA nutzt, um ein Empfangssignal zu digitalisieren. Die Abtastung ist dann schon durch das Protokoll auf eine 1-Bitauflösung begrenzt.

Es ist daher Aufgabe der Erfindung, die Messwerterfassung eines entfernungsmessenden Sensors zu verbessern.

Diese Aufgabe wird durch einen entfernungsmessenden Sensor und ein Verfahren zur Erfassung und Abstandsbestimmung von Objekten nach Anspruch 1 beziehungsweise 13 gelöst. Die Entfernungsmessung basiert auf einem Signallaufzeitverfahren, bei dem ein Sendesignal, insbesondere ein Sendepuls, ausgesandt wird und das remittierte Sendesignal, also genaugenommen die gerichteten oder ungerichteten Signalanteile, die nach Auftreffen auf einem Objekt zurückkehren, mit einer Mehrschwellabtastung in ein digitales Empfangssignal gewandelt und dann ausgewertet wird. Aufgrund der Mehrschwellabtastung ergeben sich mehrere digitale Zustände, also steht eine nicht nur binär, sondern in mehreren Werten erfasste Amplitudeninformation zur Verfügung. Die Erfindung geht dann von dem Grundgedanken aus, schon im analogen Teil des Empfangspfades vor der Mehrschwellabtastung Flanken in dem Empfangssignal zu dehnen und damit abzuflachen, somit für eine geringere Flankensteilheit zu sorgen.

Die Erfindung hat den Vorteil, dass aufgrund der gedehnten Flanke der Empfangszeitpunkt mit deutlich besserer Zeitauflösung erfasst werden kann. Das führt zu einer entsprechend höheren Genauigkeit der Abstandsbestimmung. Dabei muss die Zeitauflösung der Abtastung nicht verbessert werden, demnach kein besonders kostenträchtiger oder aus technischen Gründen noch gar nicht verfügbarer A/D-Wandler mit Mehrbitauflösung und mehreren GHz Taktfrequenz eingesetzt werden. Vielmehr ermöglicht das Dehnungsfilter, gleichsam Zeitinformation gegen Amplitudeninformation zu tauschen und letztere dann durch Mehrbitabtastung statt schnellere Abtastung zu erfassen.

Das Dehnungsfilter weist bevorzugt ein Tiefpassfilter auf. Erhält ein Tiefpassfilter als extremes Beispiel einer steilen, maximal komprimierten Flanke ein Rechtecksignal als Eingang, so werden die hohen Frequenzen darin unterdrückt, und es entsteht eine abgerundete, flachere Flanke. Die Information über den Empfangszeitpunkt ist damit nicht mehr auf einen einzigen Zeitpunkt verdichtet, sondern über ein längeres Zeitintervall ausgedehnt, und kann so auch bei langsamerer Abtastung erfasst werden.

Die Steuer- und Auswertungseinheit ist bevorzugt auf einem digitalen Baustein, insbesondere in programmierbarer Logik, in ASIC (Application Specific Integrated Circuit) oder auf einem FPGA (Field Programmable Gate Array) implementiert. Ein derartiger digitaler Baustein ist vergleichsweise kostengünstig und dennoch in der Lage, die Anforderungen an eine hochpräzise Messung zu erfüllen und dabei noch sehr viele der geforderten Funktionen mit zu implementieren, statt dafür zusätzliche Bausteine vorzusehen. Unter digitalem Baustein soll hier und im Folgenden jegliche konfigurierbare digitale Auswertung gemeint sein, die durch Vorkonfiguration der digitalen Verschaltung des Bausteins auf die Anwendung angepasst ist, statt wie bei einem echten Mikroprozessor durch Ablauf eines Programms auf einer universellen Auswertungseinheit zu erfolgen. Die derzeit bevorzugte Variante einer solchen programmierbaren Logik ist ein FPGA. Deshalb wird im Folgenden mehrfach von FPGA stellvertretend für die genannte Familie von digitalen Bausteinen gesprochen, die Erfindung ist aber darauf nicht beschränkt. Es ist aber dank der erfindungsgemäßen Dehnung der Flanke auch möglich, ein Lichtlaufzeitverfahren mit anderen kommerziell erhältlichen Bausteinen zu implementieren. Solche Bausteine ergänzen oder ersetzen den digitalen Baustein der Steuer- und Auswertungslogik und weisen einen Standard-Transceiver beziehungsweise hochfrequente Datenschnittstellen auf. Zu nennen wären hier SERDES-Bausteine, deren Kommunikationskanäle entgegen dem eigentlichen Zweck zum Sampeln des Empfangssignals genutzt werden, oder Video-Controller etwa mit HDMI-Schnittstelle, die an sich überhaupt nicht für ein Laufzeitverfahren gedacht sind, aber dank der Erfindung dafür genutzt werden können. Mehrere Komparatoren an sich für eine Parallelabtastung, erfindungsgemäß jedoch genutzt für die Umsetzung einer Mehrschwellenabtastung, sind nämlich in derartigen Bausteinen üblicherweise vorhanden.

Die Steuer- und Auswertungseinheit ist bevorzugt dafür ausgebildet, über den Sender eine Vielzahl von Sendesignalen auszusenden, die daraufhin von dem Empfänger erzeugten Empfangssignale in einem Histogramm zu sammeln und aus dem Histogramm einen Empfangszeitpunkt und somit einen Messwert für die Signallaufzeit von dem Sensor zu dem Objekt zu bestimmen. Dabei wird zunächst der einleitend erläuterte statistische Ansatz verfolgt, bei dem die Messgenauigkeit und insbesondere das Signal-Rausch-Verhältnis durch Messwiederholung und statistische Auswertung deutlich verbessert wird. Durch die Mehrschwellenabtastung und Dehnung der Flanke wird dieses Verfahren noch genauer.

Die Steuer- und Auswertungseinheit ist bevorzugt dafür ausgebildet, die jeweiligen Beiträge zu dem Histogramm je nach digitalem Zustand zu gewichten. Eine beispielhafte Gewichtung bei drei Schwellen führt zu vier digitalen Zuständen, und das Bin des Histogramms, das zu dem jeweils für das Bin betrachteten Abschnitt des Empfangssignals gehört, wird um eine Anzahl 0, 1, 2 oder 3 heraufgezählt, je nachdem wie viele der Schwellen von dem Empfangssignal in dem Abschnitt überschritten sind. Die Bestimmung des Empfangszeitpunkts erfolgt weiterhin nachgelagert auf Ebene des derart gebildeten Histogramms.

Vor dem Dehnungsfilter ist bevorzugt ein Bipolarfilter zur Umwandlung eines zunächst unipolaren Empfangssignals in ein bipolares Signal angeordnet. Die Echos eines Sendepulses von Objekten oder Störern im Überwachungsbereich sind zunächst ebenfalls zumindest grob pulsförmig, bilden also einen Peak und sind demnach unipolar. Das gilt vor allem bei Lichtsignalen, die nicht negativ werden können und demnach stets nur unipolare Empfangssignale erzeugen. Das Filter wandelt das unipolare Empfangssignal in ein bipolares Signal beispielsweise als eine Schwingung mit mindestens einem Maximum, einem Minimum und einem Nulldurchgang dazwischen. Als Bipolarfilter eignet sich insbesondere ein Bandpassfilter oder ein Differenzierer. Zusätzlich kann ein Verstärker, insbesondere einen Transimpedanzverstärker, vor oder nach dem Bipolarfilter vorgesehen sein.

Vor dem Dehnungsfilter ist bevorzugt ein Begrenzerverstärker angeordnet, insbesondere nach dem Bipolarfilter. Dadurch wird das Empfangssignal bis zur Sättigung verstärkt und bildet danach ein Rechtecksignal. Dieses Rechtecksignal enthält die gesamte relevante Zeitinformation in praktisch einem einzigen Zeitpunkt, so dass hierfür das Dehnungsfilter besonders nützlich ist.

In der Mehrschwellabtasteinheit ist bevorzugt eine Nullschwelle sowie eine erste Schwelle und eine zweite Schwelle verschiedenen Vorzeichens und insbesondere gleichen Betrags festgelegt. Die Nullschwelle liegt allgemein bei einer mittleren Amplitude, vorzugsweise tatsächlich bei Null. Für ein Lichtsignal ist ein mittlerer Signalpegel Null nur mit vorgeschaltetem Bipolarfilter erreichbar. Die erste und zweite Schwelle liegen um diese Nullschwelle, vorzugsweise symmetrisch. Es sind mehr als drei Schwellen möglich, aber diese Anzahl ist ein guter Kompromiss von verhältnismäßig kleinem Aufwand für die Mehrschwellenabtastung bei großem Gewinn gegenüber der Verwendung nur einer einzigen Schwelle.

Zwischen Dehnungsfilter und Mehrschwellabtasteinheit ist vorzugsweise ein Widerstandsnetzwerk angeordnet, um Schwellenspannungen für die Mehrschwellabtasteinheit zu erzeugen. Damit können die Schwellen mit sehr einfachen und preisgünstigen Bauteilen definiert werden. Wird das Widerstandsnetzwerk nicht gegen Masse abgeschlossen, sondern mit einer positiven beziehungsweise negativen Spannungsversorgung verbunden, so kann die Steuer- und Auswertungseinheit die Schwellenspannungen auch dynamisch anpassen.

Die Mehrschwellenabtasteinheit weist bevorzugt mehrere Komparatoreinheiten mit jeweils einer Schwelle auf. Das ist eine sehr einfache Implementierung, in der jeweils eine Komparatoreinheit für eine Schwelle verantwortlich ist.

Die Komparatoreinheiten sind bevorzugt über Eingänge des digitalen Bausteins implementiert. Dadurch sind keine zusätzlichen Bauelemente erforderlich, oder jedenfalls nur einfachste analoge Schaltelemente beispielsweise für das schon erwähnte Widerstandsnetz, das das Empfangssignal den gewünschten Schwellen entsprechend mehreren Eingängen des digitalen Bausteins zuführt. Alternativ sind auch eigene Komparatoren als separate Schaltungselemente möglich, die dann den Vorteil haben, dass ihre Spezifikation von derjenigen des digitalen Bausteins unabhängig ist. Das erleichtert den Einsatz in der Sicherheitstechnik, weil auf die sichere Spezifikation der Eingänge des digitalen Bausteins in der Praxis kein Einfluss genommen werden kann, verlässlich spezifizierte Komparatoren dagegen verfügbar sind.

Der Sensor ist bevorzugt als optoelektronischer Sensor, insbesondere Laserscanner ausgebildet, wobei der Sender ein Lichtsender und der Empfänger ein Lichtempfänger ist. Derartige auf Licht basierende Sensoren werden häufig zur Entfernungsmessung eingesetzt. Sie können einstrahlig sein, also auf ein Messobjekt ausgerichtet werden. Denkbar ist aber auch ein Laserscanner, bei dem die Richtung beispielsweise mittels eines Drehspiegels periodisch variiert wird, in welche die Sendepulse ausgesandt werden, so dass eine Überwachungsebene oder sogar ein Raumbereich abgetastet wird. Ein Beispiel für einen alternativen, nicht auf optischen Signalen basierenden Sensor ist ein TDR-Füllstandssensor.

Der Sensor ist bevorzugt als sicherer Sensor mit einem Sicherheitsausgang ausgebildet, bei dem die Steuer- und Auswertungseinheit dafür ausgebildet ist, unzulässige Eingriffe in Schutzfelder innerhalb des Überwachungsbereichs zu erkennen und daraufhin ein sicherheitsgerichtetes Abschaltsignal an dem Sicherheitsausgang auszugeben. Sichere Sensoren sind beispielsweise Sicherheitsscanner, entfernungsmessende beziehungsweise tastende Sicherheitslichtgitter oder sichere 3D-Lichtlaufzeitkameras.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein Blockschaltbild eines entfernungsmessenden Sensors;
- Fig. 2: ein Blockschaltbild eines Messkerns für die Signalverarbeitung in dem Sensor gemäß Figur 1;
- Fig. 3: eine Schaltungsdarstellung für eine Mehrschwellenabtastung mit vorgeordnetem Dehnungsfilter;
- Fig. 4: eine Schaltungsdarstellung einer weiteren Ausführungsform einer Mehrschwellenabtastung mit vorgeordnetem Dehnungsfilter;
- Fig. 5: ein Diagramm zur Erläuterung der Mehrschwellabtastung;
- Fig. 6: ein beispielhafter Verlauf einer Flanke eines Empfangssignals ohne Dehnungsfilter; und
- Fig. 7: ein beispielhafter Verlauf einer Flanke eines Empfangssignals mit Dehnungsfilter.

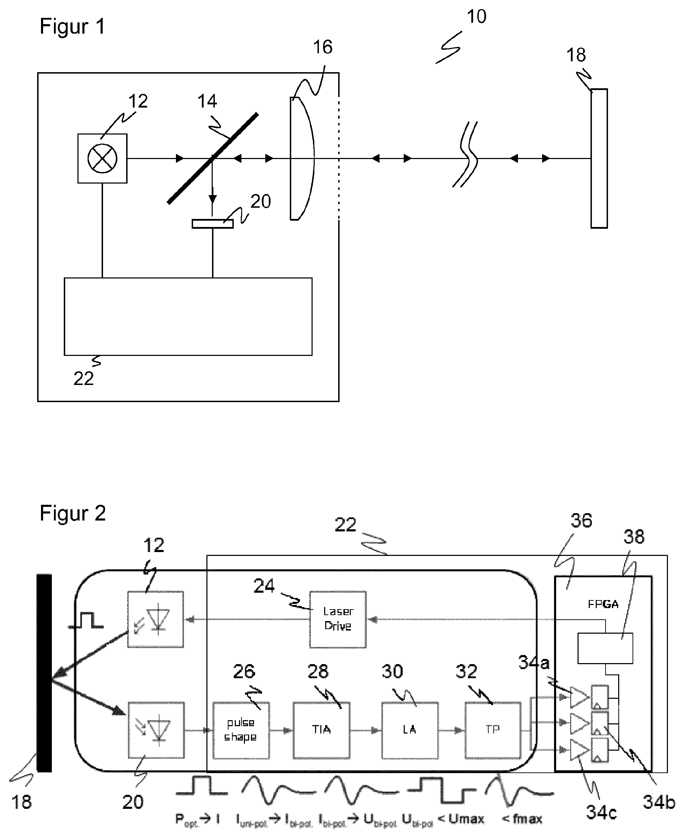

Figur 1 zeigt ein Blockschaltbild eines entfernungsmessenden Sensors 10 in einer Ausführungsform als eindimensionaler optoelektronischer Entfernungstaster. Ein Lichtsender 12 ist so ausgerichtet, dass sein Sendelicht einen Teilerspiegel 14 transmittiert und anschließend über eine Optik 16 in einen Überwachungsbereich 18 gelangt. Dort wird das Sendelicht, wenn sich ein Objekt 18 im Strahlengang befindet, an diesem Objekt 18 reflektiert oder remittiert und kehrt erneut durch die Optik 16 zu dem Teilerspiegel 14 zurück, wo es in einen Lichtempfänger 20 gespiegelt und dort erfasst wird. Die Teilerspiegelanordnung ist rein beispielhaft zu verstehen, die Erfindung umfasst ebenso andere Anordnungen ohne Teilerspiegel wie beispielsweise Doppelaugen. Auch die Erläuterung an einem eindimensionalen optoelektronischen Sensor ist nur exemplarisch zu verstehen, denn ebenso kann der Sensor 10 ein mehrdimensionales System sein, wie ein Lichtgitter oder ein Laserscanner, oder mit gänzlich anderen elektromagnetischen Signalen arbeiten, wie ein TDR-Füllstandssensor.

Ein Messkern 22 steuert den Lichtsender 12 an und wertet die Signale des Lichtempfängers 20 aus. Um für eine Abstandsmessung des Objekts 18 eine Lichtlaufzeit zu ermitteln, wird ein Lichtsignal ausgesandt und wieder empfangen und die Differenz zwischen Sende- und Empfangszeitpunkt bestimmt. Das Lichtsignal ist vorzugsweise pulsförmig. Als Signalform eignet sich ein Rechteckpuls, es sind aber auch andere Pulse, wie beispielsweise Gausspulse, multimodale Signale beispielsweise zur codierten Zuordnung jedes Signals und auch Stufen denkbar. Das Signal muss damit nicht zwingend pulsförmig sein, da es nur darauf ankommt, dass es jedenfalls charakteristische Merkmale wie Extrema und damit Flanken enthält, welche eine zeitliche Festlegung erlauben. In einer bevorzugten Ausführungsform erfolgt diese Auswertung nicht auf Basis von Einzelereignissen mit nur einem einzigen Lichtpuls, sondern in einer Auswertung mittels eines Histogramms, das von einer Vielzahl von Einzelereignissen gebildet wird. Dazu wird nochmals auf die in der Einleitung genannten Dokumente verwiesen.

Figur 2 zeigt ein Blockschaltbild des Messkerns 22 sowie beispielhafte Verläufe des Sende- und Empfangssignals in verschiedenen Stadien. In einem Sendepfad ist vor dem eigentlichen Sender 12 eine Treiberschaltung 24 vorgesehen, mit deren Hilfe ein hier rechteckig dargestellter Lichtpuls ausgesandt wird. Nach Remission an dem Objekt 18 wird der Lichtpuls in dem Lichtempfänger 20 in einen Empfangsstrom gewandelt, der zunächst einen analogen Empfangspfad durchläuft und anschließend digital ausgewertet wird.

In der analogen Vorverarbeitung wird aus dem rechteckförmigen Empfangspuls durch ein Bipolarfilter 26, das beispielsweise ein Bandpassfilter oder ein Differenzierer sein kann, ein bipolares Signal. Der Rechteckpuls stößt dabei praktisch eine Schwingung an, die anschließend abklingt und zu der bipolaren Signalform führt. Diese Schwingung enthält weiterhin sämtliche Intensitäts- und Zeitinformationen und erleichtert den Umgang mit einem großen Dynamikbereich wesentlich. Das bipolare Signal wird anschließend in einem Verstärker 28 verstärkt, etwa einem Transimpedanzverstärker zu einem verstärkten Spannungssignal. Bipolarfilter 26 und Verstärker 28 können auch in umgekehrter Reihenfolge geschaltet sein. In einem Begrenzerverstärker 30 wird das verstärkte Spannungssignal bis in die Sättigung verstärkt und damit zu einem Rechtecksignal, bleibt aber weiterhin ein bipolares Signal, das auch eine negative Rechteckschwingung umfasst. Durch ein Dehnungsfilter 32, beispielsweise eine Tiefpassschaltung, wird die Steilheit der Flanken des Rechtecksignals reduziert.

Anschließend erfolgt die Mehrschwellabtastung. In dem Messkern 22 gemäß Figur 2 wird die Mehrschwellabtastung über Komparatoren 34a-c an Eingängen einer auf einem FPGA 36 implementierten Steuer- und Auswertungseinheit 38 implementiert. Dort wird das Empfangssignal digital weiter ausgewertet, um den Empfangszeitpunkt und daraus mit Hilfe des bekannten Sendezeitpunkts die gesuchte Lichtlaufzeit zu bestimmen. In einer alternativen Ausführungsform sind die Komparatoren 34a-c eigene Bauteile.

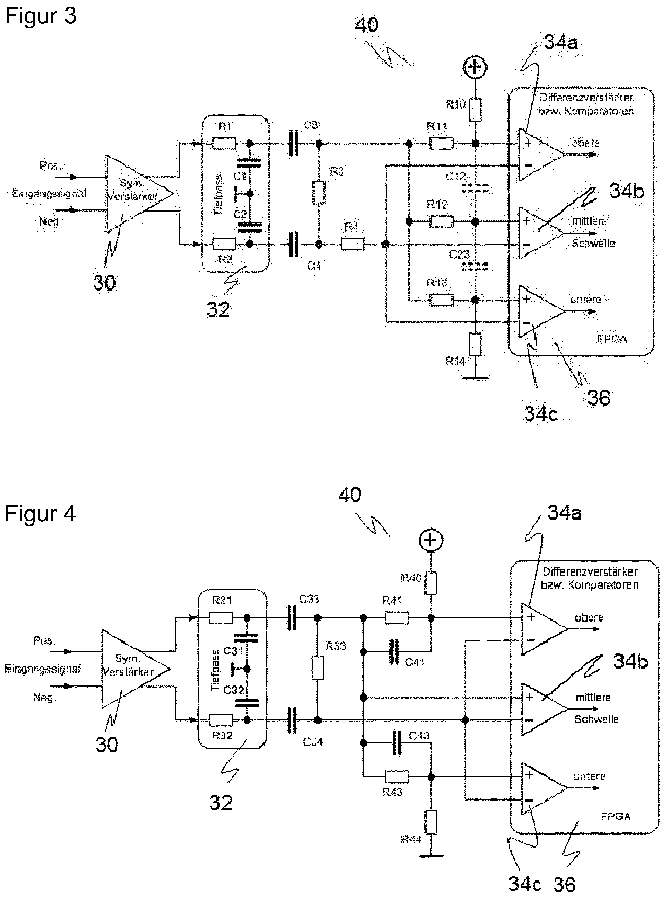

Auf den ersten Blick erscheint die Kombination eines Begrenzerverstärkers 30 und einer Mehrschwellenabtastung sinnlos. Aus der mehrwertigen Erfassung einer senkrechten Flanke ergibt sich im Gegensatz zu einer 1-Bit-Abtastung zunächst kein Vorteil. Die Begrenzung des Analogsignals nach dem Begrenzerverstärker 30 stellt eine extreme Dynamikkomprimierung dar. Alle Signale im Dynamikbereich des Sensors 10 führen zu einer Vollaussteuerung am Ausgang des Begrenzerverstärkers 30. Die Distanzinformation steckt dann lediglich in der Phase, nicht in der Amplitude. Erst durch Hinzufügen der Steigungsbegrenzung durch das Dehnungsfilter 32 wird ein Systemgewinn erzielt. Das Dehnungsfilter 32 ermöglicht einen Transfer von Zeitinformation in Amplitudeninformation. Diese Amplitudeninformation wiederum ermöglicht dann aufgrund der Mehrschwellenabtastung eine höhere äquivalente Abtastrate. Die Kombination aus Dehnungsfilter 32 und Mehrschwellenabtastung kann außerdem durch ein Widerstandsnetzwerk und Eingänge des FPGA 36 besonders effizient umgesetzt werden, wie nachfolgend anhand der Figuren 3 und 4 noch näher erläutert.

Figur 3 zeigt eine beispielhafte Schaltungsanordnung für das Dehnungsfilter 32 und ein nachgeordnetes Widerstandsnetzwerk 40, welches die Schwellen für die Mehrschwellenabtastung mittels der Komparatoren 34a-c bereitstellt. Das Dehnungsfilter 32 ist dabei als Tiefpassschaltung implementiert. Durch das Widerstandsnetzwerk 40 werden drei Schwellen definiert, nämlich je eine obere, mittlere und untere Schwelle. Beispielsweise spricht die mittlere Schwelle bei einer Differenzspannung von etwa Null, die obere Schwelle bei einer definierten positiven und die untere Schwelle bei einer definierten negativen Spannungsdifferenz an.

Die Höhe der oberen beziehungsweise unteren Schwelle wird durch den Spannungsabfall an den Widerständen R11 beziehungsweise R13 bestimmt. Wird der Widerstand R14, anstatt ihn nach Masse zu legen, mit einer negativen Steuerspannung beaufschlagt und entsprechend dem Widerstand R10 eine positive Steuerspannung zugeführt, so können die Schwellen auch dynamisch variiert werden. Beispielsweise kann die Steuer- und Auswertungseinheit 38 über das FPGA 36 zwei solche Steuerspannungen ausgeben, um sich an unterschiedliche Empfangssituationen anzupassen. Ein beispielhaftes Kriterium dafür ist eine Regelung der äußeren Schwellen derart, dass sich ein vorgegebenes Tastverhältnis etwa von 20% beziehungsweise 80% ergibt.

Der Widerstand R12 soll dafür sorgen, dass sich die Zeitkonstanten der RC-Glieder an den Komparatoreingängen ähneln. Dabei stellt der C-Anteil die Eingangskapazität des Komparators 34a-c dar. Eine geeignete Dimensionierung für symmetrische Schwellen um eine mittlere Nullschwelle ergibt sich zu R10 // R11 = R13 // 14 = R12.

Durch Hinzufügen der Kondensatoren C12 und C23 kann gegebenenfalls, wenn die Zeitkonstanten untereinander sich beispielsweise wegen Eingangskapazitätsunterschieden deutlich unterscheiden, ein gleich großes AC-Signal an den Komparatoreingängen erreicht werden. Der Widerstand R4 bildet in Kombination mit den Eingangskapazitäten der drei negativen Komparatoreingänge das entsprechende RC-Glied für das negative Eingangssignal und wird vorzugsweise zu R4=R12/3 dimensioniert. Der Widerstand R3 ermöglicht, die mittlere Schwelle ohne Differenzspannung zu betreiben.

Durch das Dehnungsfilter 32 wird die Flankensteilheit des Eingangssignals reduziert und sichergestellt, dass beispielsweise bei einem rechteckförmigen Eingangssignal die Schwellen nicht gleichzeitig, sondern nacheinander ausgelöst wer, insbesondere bei einem symmetrisch zu einem Nullpegel liegenden Rechtecksignal wie demjenigen gemäß Figur 2 die äußeren Schwellen erst nach der mittleren Schwelle.

In einer alternativen Ausführungsform erfolgt die Realisierung des Dehnungsfilters 32 mittels der Eingangskapazität der Komparatoreingänge 34a-c von typischerweise einigen pF in Kombination mit den Längswiderständen für die Schwellen. Dabei wird dann sozusagen der Tiefpass R1, C2, R2, C2 vor den Schwellenwiderständen R11, R13 durch drei Tiefpässe an den Komparatoreingängen 34a-c ersetzt oder ergänzt, wobei die Eingangskapazitäten der Komparatoreingänge 34a-c als C-Anteil und die Schwellenwiderstände R11, R13 als R-Anteil fungieren.

Figur 4 zeigt eine alternative Schaltung, in der die RC-Zeitglieder direkt am Eingang der Komparatoren 34a-c entfallen.

In einer weiteren nicht gezeigten Variation der Schaltungen nach Figur 3 und 4 kann das Dehnungsfilter 32 durch eine definierte Flankensteilheit am Ausgang des Begrenzerverstärkers 30 ersetzt oder ergänzt werden.

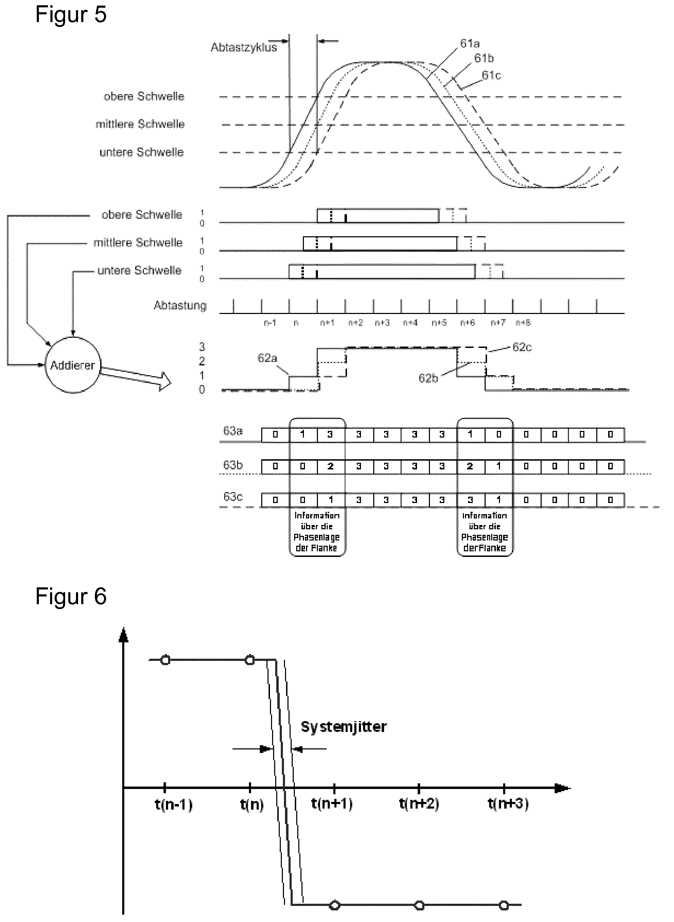

Figur 5 zeigt ein Diagramm, in dem die Mehrschwellenabtastung nochmals näher erläutert wird. Dies geschieht weiterhin am Beispiel von drei Schwellen, was besonders vorteilhaft ist, weil hier mit vergleichsweise wenig Aufwand ein besonders hoher Gewinn an Zeitauflösung erzielt wird. Dennoch sind auch nur zwei oder mehr als drei Schwellen denkbar.

Die zeitliche Auflösung des Empfangssignals ist durch die Abtastfrequenz vorgegeben, mit welcher die Komparatoren 34a-c arbeiten beziehungsweise abgefragt werden. Im oberen Teil der Figur 5 sind drei beispielhafte Empfangssignale 61a-c mit geringem Zeitversatz zueinander gezeigt. Mit einer Einschwellenabtastung könnte bestenfalls ein Zeitversatz entsprechend dem eingezeichneten Abtastzyklus, also gerade noch zwischen den Empfangssignalen 61 a und 61 c unterschieden werden. Dazwischenliegende Empfangssignale 62b könnten nicht mehr weiter aufgelöst werden, sondern würden wie eines der anderen Empfangssignale 61 a, 61 c behandelt.

Der weitere Teil der Figur 5 verdeutlicht die Steigerung der zeitlichen Auflösung durch die Mehrschwellenabtastung. Die drei Schwellen schneiden das Empfangssignal in unterschiedlicher Höhe ab. Je nachdem, wie viele Schwellen überschritten sind, wird das dann im digitalen Empfangssignal unterschiedlich gewichtet. Das gleiche Ergebnis lässt sich auch erreichen, indem durch die jeweilige Schwelle binarisierte Signale einem Addierer zugeführt werden. Am Ausgang dieses Addierers ergeben sich dann drei unterschiedliche digitale Signalverläufe 62a-c aus den Empfangssignalen 61a-c. Diese digitalen Signalverläufe sind ganz unten in Figur 5 nochmals als Zahlenreihen 63a-c dargestellt. Es ergibt sich jeweils ein unterschiedlicher Stufenverlauf an den Flanken, der im Vergleich mit einer Einschwellenabtastung zusätzliche Informationen über die Phasenlage enthält und damit eine verbesserte Zeitauflösung ermöglicht.

In einer bevorzugten Ausführungsform der Erfindung ist vorgesehen, die Lichtlaufzeit nicht aus einer einzigen Messung, sondern durch wiederholte Einzelmessungen, Sammeln der Empfangsinformationen in einem Histogramm und dessen statistische Auswertung zu gewinnen. Die Bins des Histogramms sind Zeitabschnitten des Empfangssignals zugeordnet, vorzugsweise jeweils ein Bin je Abtastintervall des digitalen Empfangssignals. Die Bins sind anfänglich auf Null gesetzt. Dabei ist der Beitrag eines jeweiligen Abtastintervalls einer Einzelmessung zu dem entsprechenden Bin davon abhängig, welche der Schwellen überschritten ist. Beispielsweise wird zu dem Bin 0, 1, 2 oder 3 addiert, je nachdem, wie viele der Schwellen überschritten sind. Die Zahlenreihen 63a-c stellen also so etwas wie ein Einzelhistogramm einer einzelnen Messung dar, die dann durch Aufaddieren zu dem eigentlichen Histogramm überlagert werden.

Figur 6 zeigt noch einmal eine fallende Flanke eines Empfangssignals für den Fall, dass kein Dehnungsfilter 32 vorgesehen ist. Daraus wird deutlich, dass die Messgenauigkeit unmittelbar durch die Zeitauflösung der Abtastung begrenzt ist, unabhängig davon, mit welcher Genauigkeit die Amplitude erfasst wird. Um eine hochgenaue Messung zu erreichen, sind daher zusätzliche Maßnahmen zur Erhöhung der Abtastrate erforderlich, von denen einleitend einige genannt sind.

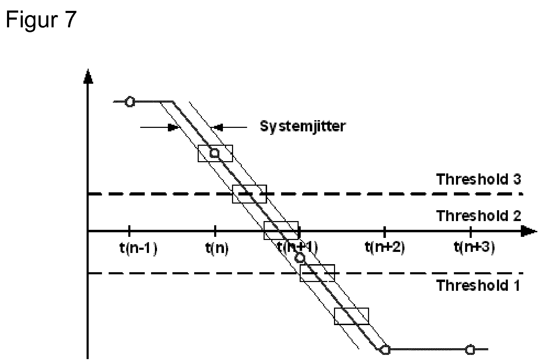

Figur 7 zeigt zum Vergleich eine fallende Flanke eines Empfangssignals, welche durch das Dehnungsfilter 32 gespreizt wurde, und die Anwendung einer Abtastung mit drei Schwellen. Die Schwellen bewirkten nun effektiv eine Erhöhung der Abtastrate. Solange nun der Systemjitter in der Größenordnung von Abtastrate*Anzahl Schwellen liegt, ist eine zusätzliche Erhöhung der Abtastrate nicht erforderlich. Sie würde sogar gemessen an der ohnehin vorhandenen Ungenauigkeit des Systemjitters keinen Gewinn mehr bringen.

## Patentansprüche

1. Entfernungsmessender Sensor (10) zur Erfassung und Abstandsbestimmung von Objekten (18) in einem Überwachungsbereich mit einem Sender (12) zum Aussenden von Sendesignalen, einem Empfänger (20) zum Erzeugen eines Empfangssignals aus den von einem Objekt (18) in dem Überwachungsbereich remittierten Sendesignalen, einer Mehrschwellenabtasteinheit (34) zur Digitalisierung des Empfangssignals in mehreren digitalen Zuständen und einer Steuer- und Auswertungseinheit (38), die dafür ausgebildet ist, aus dem digitalisierten Empfangssignal einen Empfangszeitpunkt und daraus einen Messwert für die Signallaufzeit von dem Sensor (10) zu dem Objekt (18) zu bestimmen, **dadurch gekennzeichnet,**
**dass** vor der Mehrschwellenabtasteinheit (34) ein Dehnungsfilter (32) und vor dem Dehnungsfilter (32) ein Begrenzerverstärker (28) angeordnet ist, so dass das Dehnungsfilter (32) die Steilheit der Flanken des in dem Begrenzerverstärker (28) verstärkten Empfangssignals abflacht, um die Information über den Empfangszeitpunkt über ein längeres Zeitintervall auszudehnen und mit der in der Mehrschwellenabtasteinheit (34) in mehreren digitalen Zuständen erfassten Amplitudeninformation eine höhere äquivalente Abtastrate zu erzielen.

2. Sensor (10) nach Anspruch 1,
wobei das Dehnungsfilter (32) ein Tiefpassfilter aufweist.

3. Sensor (10) nach Anspruch 1 oder 2,
wobei die Steuer- und Auswertungseinheit (38) auf einem digitalen Baustein (36), insbesondere in programmierbarer Logik, in ASIC oder auf einem FPGA implementiert ist.

4. Sensor (10) nach einem der vorhergehenden Ansprüche,
wobei die Steuer- und Auswertungseinheit (38) dafür ausgebildet ist, über den Sender (12) eine Vielzahl von Sendesignalen auszusenden, die daraufhin von dem Empfänger (20) erzeugten Empfangssignale in einem Histogramm zu sammeln und aus dem Histogramm einen Empfangszeitpunkt und somit einen Messwert für die Signallaufzeit von dem Sensor (10) zu dem Objekt (18) zu bestimmen.

5. Sensor (10) nach Anspruch 4,
wobei die Steuer- und Auswertungseinheit (38) dafür ausgebildet ist, die jeweiligen Beiträge zu dem Histogramm je nach digitalem Zustand zu gewichten.

6. Sensor (10) nach einem der vorhergehenden Ansprüche,
wobei vor dem Dehnungsfilter (32) ein Bipolarfilter (26) zur Umwandlung eines zunächst unipolaren Empfangssignals in ein bipolares Signal angeordnet ist.

7. Sensor (10) nach einem der vorhergehenden Ansprüche,
wobei in der Mehrschwellabtasteinheit (34) eine Nullschwelle sowie eine erste Schwelle und eine zweite Schwelle verschiedenen Vorzeichens und insbesondere gleichen Betrags festgelegt ist.

8. Sensor (10) nach einem der vorhergehenden Ansprüche,
wobei zwischen Dehnungsfilter (32) und Mehrschwellabtasteinheit (34, 40) ein Widerstandsnetzwerk (40) angeordnet ist, um Schwellenspannungen für die Mehrschwellabtasteinheit (34) zu erzeugen.

9. Sensor (10) nach einem der vorhergehenden Ansprüche,
wobei die Mehrschwellenabtasteinheit (34) mehrere Komparatoreinheiten mit jeweils einer Schwelle aufweist.

10. Sensor (10) nach Anspruch 3 und 9,
wobei die Komparatoreinheiten (34a-c) über Eingänge des digitalen Bausteins (36) implementiert sind.

11. Sensor (10) nach einem der vorhergehenden Ansprüche,
der als optoelektronischer Sensor, insbesondere Laserscanner ausgebildet ist, wobei der Sender (12) ein Lichtsender und der Empfänger (20) ein Lichtempfänger ist.

12. Verfahren zur Erfassung und Abstandsbestimmung von Objekten (18) in einem Überwachungsbereich, bei dem ein Sendesignal ausgesandt und aus dem von einem Objekt (18) in dem Überwachungsbereich remittierten Sendesignal ein Empfangssignal erzeugt wird, welches mit mehreren Schwellen in mehreren digitalen Zuständen digitalisiert wird, wobei aus dem digitalisierten Empfangssignal ein Empfangszeitpunkt und daraus ein Messwert für die Signallaufzeit von dem Sensor (10) zu dem Objekt (18) bestimmt wird,
**dadurch gekennzeichnet,**
**dass** vor dem Digitalisieren das Empfangssignal zunächst in einem Begrenzerverstärker (28) verstärkt wird und dann Flanken in dem Empfangssignal in einem Dehnungsfilter (32) abgeflacht und dadurch zeitlich gedehnt werden, um die Information über den Empfangszeitpunkt über ein längeres Zeitintervall auszudehnen und mit der in den mehreren digitalen Zuständen erfassten Amplitudeninformation eine höhere äquivalente Abtastrate zu erzielen.

## Claims

1. A distance-measuring sensor (10) for detecting and determining a distance to objects (18) in a monitoring area, the sensor (10) having a transmitter (12) for transmitting transmission signals, a receiver (20) for generating a reception signal from transmission signals remitted from an object (18) in the monitoring area, a multiple threshold sampling unit (34) for digitizing the reception signal in multiple digital states, and a control and evaluation unit (38) which is configured to determine a reception point in time from the digitized reception signal and from that a measurement value for the signal time of flight from the sensor (10) to the object (18),
**characterized in that** an expansion filter (32) is arranged upstream of the multiple threshold sampling unit (34), and a limiting amplifier (28) is arranged upstream of the expansion filter (32) so that the expansion filter (32) flattens the slope of the edges of the reception signal amplified in the limiting amplifier (28) in order to expand the information about the reception point in time over a longer time interval, and to achieve a higher equivalent sampling rate from the amplitude information detected in multiple digital states by the multiple threshold sampling unit (34).

2. The sensor (10) according to claim 1,
wherein the expansion filter (32) comprises a low pass filter.

3. The sensor (10) according to claim 1 or 2,
wherein the control and evaluation unit (38) is implemented on a digital component (36), in particular in programmable logic, in ASIC or on an FPGA.

4. The sensor (10) according to any of the preceding claims,
wherein the control and evaluation unit (38) is configured to transmit a plurality of transmission signals via the transmitter (12), to accumulate the reception signals subsequently generated by the receiver (20) in a histogram, and to determine a reception point in time from the histogram and thus a measurement value for the signal time of flight from the sensor (10) to the object (18).

5. The sensor (10) according to claim 4,
wherein the control and evaluation unit (38) is configured to weight the respective contributions to the histogram with respect to the digital state.

6. The sensor (10) according to any of the preceding claims,
wherein a bipolar filter (26) is arranged upstream of the expansion filter (32) for converting the initially unipolar reception signal into a bipolar signal.

7. The sensor (10) according to any of the preceding claims,
wherein a zero threshold as well as a first threshold and a second threshold of different sign and in particular the same absolute value are defined in the multiple threshold sampling unit (34).

8. The sensor (10) according to any of the preceding claims,
wherein a resistor network (40) is arranged between expansion filter (32) and multiple threshold sampling unit (34, 40) in order to generate threshold voltages for the multiple threshold sampling unit (34).

9. The sensor (10) according to any of the preceding claims,
wherein the multiple threshold sampling unit (34) comprises multiple comparator units each with one threshold.

10. The sensor (10) according to claim 3 and 9,
wherein the comparator units (34a-c) are implemented via inputs of the digital component (36).

11. The sensor (10) according to any of the preceding claims,
which is configured as an optoelectronic sensor, in particular a laser scanner, wherein the transmitter (12) is a light transmitter and the receiver (20) is a light receiver.

12. A method for detecting and determining a distance to objects (18) in a monitoring area, wherein a transmission signal is transmitted and a reception signal is generated from the transmission signal remitted by an object (18) in the monitoring area, which is digitized with multiple thresholds in multiple digital states, wherein a reception point in time is determined from the digitized reception signal, and therefrom a measurement value for the signal time of flight from the sensor (10) to the object (18),
**characterized in that** prior to the digitization the reception signal at first is amplified in a limiting amplifier (28), and then edges in the reception signal are flattened in an expansion filter (32) and are thus expanded in time, in order to expand the information about the reception point in time over a longer time interval, and to achieve a higher equivalent sampling rate from the amplitude information detected in multiple digital states.

## Revendications

1. Capteur de mesure de distance (10) pour la détection et la détermination de distance d'objets (18) dans une zone de surveillance, comprenant un émetteur (12) pour émettre des signaux émis, un récepteur (20) pour engendrer un signal de réception à partir des signaux émis réémis par un objet (18) dans la zone de surveillance, comprenant une unité de palpage à seuils multiples (34) pour la numérisation du signal de réception dans plusieurs états numériques, et une unité de commande et d'évaluation (38), qui est réalisée pour déterminer un instant de réception à partir du signal de réception numérisé et pour déterminer à partir de cet instant une valeur de mesure pour le temps de parcours du signal depuis le capteur (10) jusqu'à l'objet (18),
**caractérisé en ce que**
un filtre à expansion (32) est agencé devant l'unité de palpage à seuils multiples (34) et un amplificateur-limiteur (28) est agencé devant le filtre à expansion (32), de sorte que le filtre à expansion (32) aplatit la pente des flancs du signal de réception amplifié dans l'amplificateur-limiteur (28), afin de mettre en expansion l'information au-delà de l'instant de réception sur un intervalle temporel plus long et atteindre, avec l'information d'amplitude détectée dans plusieurs états numériques dans l'unité de palpage à seuils multiples (34), une cadence de palpage équivalente plus élevée.

2. Capteur (10) selon la revendication 1,
dans lequel le filtre à expansion (32) comprend un filtre passe-bas.

3. Capteur (10) selon la revendication 1 ou 2,
dans lequel l'unité de commande et d'évaluation (38) est mise en oeuvre sur un composant numérique (36), en particulier en logique programmable, dans un composant ASIC ou sur un composant FPGA.

4. Capteur (10) selon l'une des revendications précédentes,
dans lequel l'unité de commande et d'évaluation (38) est réalisée pour émettre via l'émetteur (12) une pluralité de signaux émis, pour collecter suite à cela les signaux de réception engendrés par le récepteur (20) dans un histogramme, et pour déterminer à partir de l'histogramme un instant de réception et ainsi une valeur de mesure pour le temps de parcours du signal depuis le capteur (10) jusqu'à l'objet (18).

5. Capteur (10) selon la revendication 4,
dans lequel l'unité de commande et d'évaluation (38) est réalisée pour pondérer les contributions respectives à l'histogramme selon l'état numérique.

6. Capteur (10) selon l'une des revendications précédentes,
dans lequel un filtre bipolaire (26) est agencé devant le filtre à expansion (32) pour convertir un signal de réception tout d'abord unipolaire en un signal bipolaire.

7. Capteur (10) selon l'une des revendications précédentes,
dans lequel un seuil zéro ainsi qu'un premier seuil et un second seuil de signes différents et en particulier de même valeur sont déposés dans l'unité de palpage à seuils multiples (34).

8. Capteur (10) selon l'une des revendications précédentes,
dans lequel un réseau de résistances (40) est agencé entre le filtre à expansion (32) et l'unité de palpage à seuils multiples (34, 40), pour engendrer des tensions de seuil pour l'unité de palpage à seuils multiples (34).

9. Capteur (10) selon l'une des revendications précédentes,
dans lequel l'unité de palpage à seuils multiples (34) comprend plusieurs unités de comparateur avec chacune un seuil.

10. Capteur (10) selon la revendication 3 et 9,
dans lequel les unités de comparateur (34a-c) sont mises en oeuvre via des entrées du composant numérique (36).

11. Capteur (10) selon l'une des revendications précédentes,
qui est réalisé sous forme de capteur optoélectronique, en particulier de scanner à laser, dans lequel l'émetteur (12) est un émetteur de lumière et le récepteur (20) est un récepteur de lumière.

12. Procédé pour la détection et la détermination de distance d'objets (18) dans une zone de surveillance, dans lequel on émet un signal émis et on engendre, à partir du signal émis réémis dans la zone de surveillance par ledit objet (18), un signal de réception qui est numérisé avec plusieurs seuils dans plusieurs états numériques, dans lequel un instant de réception est déterminé à partir du signal de réception numérisé et à partir de celui-ci une valeur de mesure est déterminée pour le temps de parcours du signal depuis le capteur (10) jusqu'à l'objet (18),
**caractérisé en ce que**, avant la numérisation, le signal de réception est tout d'abord amplifié dans un amplificateur-limiteur (28) et des flancs dans le signal de réception sont alors aplatis dans un filtre à expansion (32) et grâce à cela mis en expansion dans le temps, afin de mettre en expansion l'information au-delà de l'instant de réception sur un intervalle temporel plus long, et d'atteindre, avec l'information d'amplitude détectée dans plusieurs états numériques, une cadence de palpage équivalente plus élevée.
